# EUROPÄISCHE PATENTSCHRIFT

(11) **EP 2 862 668 B1**
(45) Veröffentlichungstag und Bekanntmachung des Hinweises auf die Patenterteilung: **22.05.2019**
(21) Anmeldenummer: 14197249.7
(22) Anmeldetag: 05.11.2013
(51) Int. Cl.: B23Q 1/00, B23Q 3/08, B23Q 3/154

(54) **Verfahren zum Einspannen einer Werkstückpalette oder eines Werkstücks**
Method for clamping a workpiece pallet or a workpiece
Procédé de serrage d'une palette ou d'une pièce

(30) Priorität: 12.11.2012 DE 102012220591
(43) Veröffentlichungstag der Anmeldung: 22.04.2015
(62) Teilanmeldung aus: 13191658.7
(73) Patentinhaber: Andreas Maier GmbH & Co. KG, 70734 Fellbach (DE)
(72) Erfinder: Göbel, Volker, 70563 Stuttgart (DE); Sayler, Johannes, 71409 Schwaikheim (DE)
(74) Vertreter: Hoeger, Stellrecht & Partner Patentanwälte mbB

(56) Entgegenhaltungen:
- EP-A2- 0 873 816
- DE-A1- 19 861 091
- DE-C1- 3 525 584
- DE-U1-202008 001 306
- US-A1- 2003 150 240
- US-A1- 2009 309 283
- US-B1- 6 186 567

## Beschreibung

Die vorliegende Erfindung betrifft ein Verfahren zum Einspannen einer Werkstückpalette oder eines Werkstücks und eine Verwendung einer Spannvorrichtung bei der Durchführung eines solchen Verfahrens, wobei die Spannvorrichtung eine Arretiervorrichtung zum Arretieren eines Einzugsnippels in einer Einzugsnippelaufnahme der Spannvorrichtung umfasst.

Spannvorrichtungen dieser Art sind insbesondere auch unter der Bezeichnung "Schnellspannzylinder" oder "Nullpunktspannvorrichtung" bekannt.

Die DE 20 2008 001 306 U1 offenbart eine Spannvorrichtung zum Einspannen eines Einzugsnippels einer Werkstückpalette oder eines Werkstücks, wobei die Spannvorrichtung eine Arretiervorrichtung zum Arretieren des Einzugsnippels in einer Einzugsnippelaufnahme der Spannvorrichtung und eine Fixiervorrichtung, mittels welcher die Spannvorrichtung an einem Untergrund in einer Arbeitsposition lösbar fixiert ist, umfasst.

Die US 6 186 567 B1 offenbart eine Positioniervorrichtung, die mittels eines Elektromagneten oder mittels Vakuum an einem Untergrund in einer Arbeitsposition lösbar fixierbar ist.

Die EP 0 873 816 A2 offenbart einen Positionier-Schnellspannzylinder zum Zentrieren und Einziehen eines Einzugsnippels, wobei der Schnellspannzylinder lageorientiert an einem Zubehörteil befestigbar ist.

Die DE 35 25 584 C1 offenbart eine Spannvorrichtung für Werkstücke in einer Werkzeugmaschine, die eine Magnetspannplatte und eine auf der Magnetspannplatte aufliegende Vakuumspannplatte zum Einspannen von nichtmagnetischen Werkstücken umfasst.

Die US 2003/150240 A1 offenbart Vakuum-Saugbecher, welche jeweils mittels einer unteren Vakuum-Saugvorrichtung an einem Arbeitstisch lösbar festlegbar sind und mittels einer oberen Vakuum-Saugvorrichtung ein Werkstück mit ebenen Anlageflächen halten können, wobei die obere und die untere Saugvorrichtung über eine gemeinsame Vakuum-Leitung an eine externe Vakuumquelle angeschlossen sind.

Die US 2009/309283 A1 offenbart Vakuum-Werkstückhalterungen, welche jeweils mittels einer unteren Vakuum-Saugeinrichtung lösbar an einem Arbeitstisch festlegbar sind und mittels einer oberen Vakuum-Saugeinrichtung ein Werkstück mit ebenen Anlageflächen halten können.

DE 198 61 091 A1 offenbart ein Verfahren zum Einspannen einer Werkstückpalette mit zwei Einzugsnippeln.

Um Werkstückpaletten oder Werkstücke verdrehsicher einspannen zu können, wird eine Spannanlage mit zwei oder mehr Spannvorrichtungen verwendet, wobei mit jeder Spannvorrichtung jeweils ein Einzugsnippel der Werkstückpalette beziehungsweise des Werkstücks eingespannt wird. Die Spannvorrichtungen werden durch Befestigungsmittel, beispielsweise Befestigungsschrauben, an einem Untergrund, beispielsweise an einem Maschinentisch einer Werkzeugmaschine, festgelegt. Durch die Festlegung der Spannvorrichtungen an dem Untergrund ist der Abstand zwischen den Einzugsnippelaufnahmen der Spannvorrichtungen fest vorgegeben, so dass der Abstand zwischen den Einzugsnippeln der zu spannenden Werkstückpalette oder des zu spannenden Werkstücks diesem vorgegebenen Abstand der Einzugsnippelaufnahmen entsprechen muss.

Der vorliegenden Erfindung liegt die Aufgabe zugrunde, ein Verfahren der eingangs genannten Art zu schaffen, welches eine größere Flexibilität beim Einspannen von Werkstückpaletten oder Werkstücken mit mehreren Einzugsnippeln ermöglicht.

Diese Aufgabe wird durch ein Verfahren nach Anspruch 1 gelöst.

Der erfindungsgemäßen Lösung liegt das Konzept zugrunde, die Spannvorrichtung statt mit Befestigungsschrauben mittels einer Vakuumspanneinrichtung an einem Untergrund lösbar zu fixieren. Hierdurch wird der Vorteil erzielt, dass die Fixierung mittels einer Vakuumspanneinrichtung besonders leicht und einfach lösbar und wiederherstellbar ist, so dass die Spannvorrichtung bei Bedarf sehr rasch von einer ersten Arbeitsposition in eine zweite Arbeitsposition bewegbar und in der zweiten Arbeitsposition wieder fixierbar ist.

Insbesondere ermöglicht es das erfindungsgemäße Verfahren, den Abstand der Spannvorrichtung von einer weiteren Spannvorrichtung rasch und in einfacher Weise zu verändern, so dass dieser Abstand dem Abstand zwischen den jeweils einzuspannenden Einzugsnippeln der Werkstückpalette oder des Werkstücks angepasst werden kann.

Bei dem erfindungsgemäßen Verfahren ist es daher nicht mehr erforderlich, die Positionen der Einzugsnippel an der Werkstückpalette beziehungsweise an dem Werkstück an eine fest vorgegebene Relativpositionierung der Spannvorrichtungen anzupassen; vielmehr kann die Relativpositionierung der Spannvorrichtungen untereinander in einfacher Weise an eine vorgegebene Relativpositionierung der Einzugsnippel angepasst werden.

Der Untergrund, an welchem die Spannvorrichtung in einer Arbeitsposition lösbar fixiert ist, ist vorzugsweise im Wesentlichen eben ausgebildet, so dass die Spannvorrichtung nach dem Lösen von dem Untergrund besonders leicht in eine neue Arbeitsposition an dem Untergrund verschiebbar ist.

Bei einer bevorzugten Ausgestaltung der Erfindung ist vorgesehen, dass die Spannvorrichtung ein Gehäuse umfasst, in dem die Arretiervorrichtung und die Fixiervorrichtung angeordnet sind. Durch die Integration der Arretiervorrichtung und der Fixiervorrichtung in ein und demselben Gehäuse wird eine besonders gute Handhabbarkeit der erfindungsgemäßen Spannvorrichtung erzielt.

Bei einer besonderen Ausgestaltung der Erfindung umfasst die Arretiervorrichtung einen verschieblichen Kolben, der mit einem unter Druck stehenden Fluid beaufschlagbar ist.

Bei dem Fluid kann es sich insbesondere um ein Pneumatikfluid, beispielsweise Luft, oder um ein Hydraulikfluid, beispielsweise ein Hydrauliköl, handeln.

Ferner kann vorgesehen sein, dass die Arretiervorrichtung mehrere Arretierkörper umfasst, die durch Verschieben des Kolbens in eine Arretierstellung bringbar sind, in welcher die Arretierkörper den Einzugsnippel in der Einzugsnippelaufnahme arretieren.

Die Arretiervorrichtung kann ferner ein elastisches Rückstellelement, beispielsweise ein Federelement, zum Vorspannen des Kolbens in die Arretierstellung umfassen.

Die Fixiervorrichtung umfasst vorzugsweise einen Fixierbereich, an welchem in einem Fixierzustand der Fixiervorrichtung, in dem die Spannvorrichtung lösbar an dem Untergrund fixiert ist, ein magnetischer Fluss und/oder ein Unterdruck erzeugbar ist.

Bei einer bevorzugten Ausgestaltung der Erfindung ist vorgesehen, dass die Spannvorrichtung mit dem Fixierbereich auf den Untergrund aufsetzbar ist.

Besonders günstig ist es, wenn der Fixierbereich eine, vorzugsweise im Wesentlichen ebene, Fixierfläche aufweist, mit welcher der Fixierbereich auf den Untergrund aufsetzbar ist.

Besonders günstig ist es, wenn der Fixierbereich und die Einzugsnippelaufnahme auf einander entgegengesetzten Seiten der Spannvorrichtung angeordnet sind. Auf diese Weise wird eine Kollision zwischen der einzuspannenden Werkstückpalette oder dem einzuspannenden Werkstück einerseits und dem Untergrund, an dem die Spannvorrichtung fixiert ist, vermieden.

Der Untergrund, an dem die Spannvorrichtung lösbar fixiert ist, kann insbesondere als eine Grundplatte oder als ein Maschinentisch einer Werkzeugmaschine ausgebildet sein.

Um der Arretiervorrichtung der Spannvorrichtung ein Druckfluid zuführen zu können, ist es günstig, wenn die Spannvorrichtung einen Druckfluidanschluss aufweist.

Um der Fixiervorrichtung der Spannvorrichtung einen elektrischen Strom oder eine elektrische Spannung, einen Unterdruck oder Druckluft zuführen zu können, ist es günstig, wenn die Spannvorrichtung einen Elektroanschluss, einen Vakuumanschluss oder einen Druckluftanschluss aufweist.

Für die Handhabung der Spannvorrichtung und deren Vorbereitung auf das Einspannen einer Werkstückpalette oder eines Werkstücks ist es besonders günstig, wenn der Druckfluidanschluss einerseits und der Elektroanschluss, der Vakuumanschluss oder der Druckluftanschluss andererseits auf derselben Seite der Spannvorrichtung angeordnet sind, insbesondere an derselben Seitenwand eines Gehäuses der Spannvorrichtung.

Die Spannvorrichtung eignet sich insbesondere zur Verwendung in einer Kombination von zwei oder mehr Spannvorrichtungen, wobei die zwei Spannvorrichtungen mittels ihrer Fixiervorrichtungen in unterschiedlichen Abständen voneinander an einem Untergrund fixierbar und mittels ihrer Arretiervorrichtungen mit verschiedenen Einzugsnippeln einer Werkstückpalette oder eines Werkstücks, insbesondere derselben Werkstückpalette beziehungsweise desselben Werkstücks, koppelbar sind.

Anspruch 2 betrifft die Verwendung einer Spannvorrichtung bei der Durchführung des Verfahrens nach Anspruch 1.

Die Ansprüche 3 bis 11 betreffen besondere Ausgestaltungen einer solchen Verwendung.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Werkstückpalette, die mittels Einzugsnippeln an zwei Spannvorrichtungen eingespannt ist, welche ihrerseits durch jeweils eine Fixiervorrichtung in einer Arbeitsposition an einer Grundplatte fixiert sind;
- Fig. 2: eine schematische perspektivische Darstellung einer zweiten Werkstückpalette, welche kürzer ist als die in Fig. 1 dargestellte erste Werkstückpalette und mittels Einzugsnippeln an den beiden Spannvorrichtungen aus Fig. 1 eingespannt ist, wobei die Spannvorrichtungen mittels jeweils einer Fixiervorrichtung in einer Arbeitsposition an der Grundplatte aus Fig. 1 fixiert sind, jedoch in einem geringeren Abstand voneinander als im Falle der Fig. 1;
- Fig. 3: eine schematische perspektivische Darstellung einer der Spannvorrichtungen aus den Fig. 1 und 2, mit der Blickrichtung auf eine Einzugsnippelaufnahme an einer Oberseite eines Gehäuses der Spannvorrichtung;
- Fig. 4: eine schematische perspektivische Darstellung der Spannvorrichtung aus Fig. 3, mit der Blickrichtung auf einen Fixierbereich an der Unterseite des Gehäuses der Spannvorrichtung;
- Fig. 5: einen schematischen vertikalen Schnitt durch die Spannvorrichtung aus den Fig. 3 und 4 in einem Freigabezustand einer Arretiervorrichtung der Spannvorrichtung;
- Fig. 6: einen der Fig. 5 entsprechenden schematischen vertikalen Schnitt durch die Spannvorrichtung und eine Werkstückpalette mit einem Einzugsnippel, welcher mittels der Arretiervorrichtung der Spannvorrichtung in einem Arretierzustand in einer Einzugsnippelaufnahme der Spannvorrichtung arretiert ist;
- Fig. 7: einen schematischen vertikalen Schnitt durch eine Magnetspanneinrichtung der Spannvorrichtung aus den Fig. 3 bis 6;
- Fig. 8: eine schematische perspektivische Darstellung einer zweiten Ausführungsform einer Spannvorrichtung, mit der Blickrichtung auf eine Einzugsnippelaufnahme der Spannvorrichtung, die an einer Oberseite eines Gehäuses der Spannvorrichtung angeordnet ist;
- Fig. 9: eine schematische perspektivische Darstellung der Spannvorrichtung aus Fig. 8, mit der Blickrichtung auf einen Fixierbereich, der an der Unterseite des Gehäuses der Spannvorrichtung angeordnet ist und eine unterbrechungsfreie, im Wesentlichen ebene Fixierfläche aufweist;
- Fig. 10: einen schematischen vertikalen Schnitt durch die Magnetspanneinrichtung bei der zweiten Ausführungsform;
- Fig. 11: eine schematische perspektivische Darstellung einer dritten Ausführungsform einer Spannvorrichtung, mit der Blickrichtung auf eine Einzugsnippelaufnahme an einer Oberseite des Gehäuses der Spannvorrichtung; und
- Fig. 12: eine schematische perspektivische Darstellung der Spannvorrichtung aus Fig. 11, mit der Blickrichtung auf eine Vakuumspanneinrichtung an der Unterseite der Spannvorrichtung.

Gleiche oder funktional äquivalente Elemente sind in allen Figuren mit denselben Bezugszeichen bezeichnet.

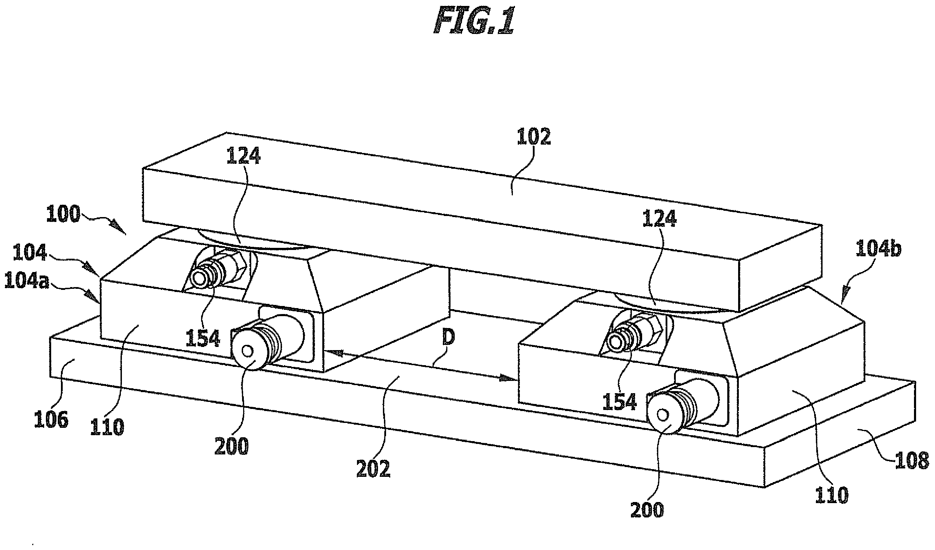

Eine in Fig. 1 dargestellte, als Ganzes mit 100 bezeichnete Spannanlage 100 zum Einspannen eines Werkstücks oder einer Werkstückpalette 102 umfasst mehrere, beispielsweise zwei, Spannvorrichtungen 104, welche an einem Untergrund 106, beispielsweise einem Maschinentisch oder einer Grundplatte 108, in einer Arbeitsposition fixierbar sind und in der Arbeitsposition einen Abstand D voneinander aufweisen.

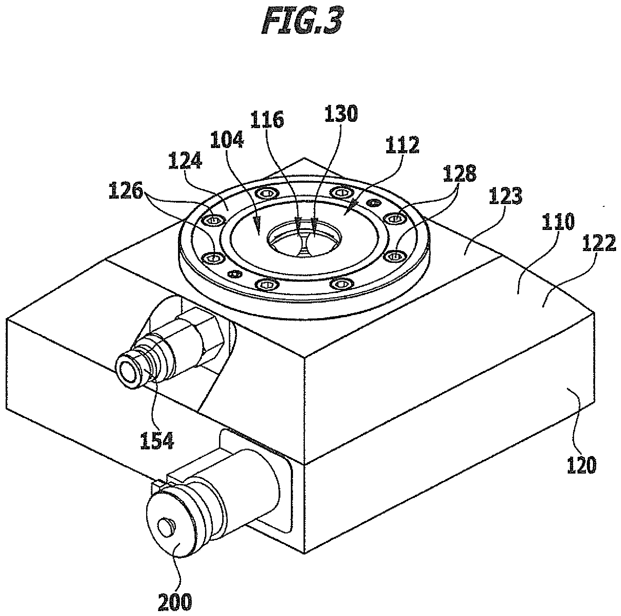

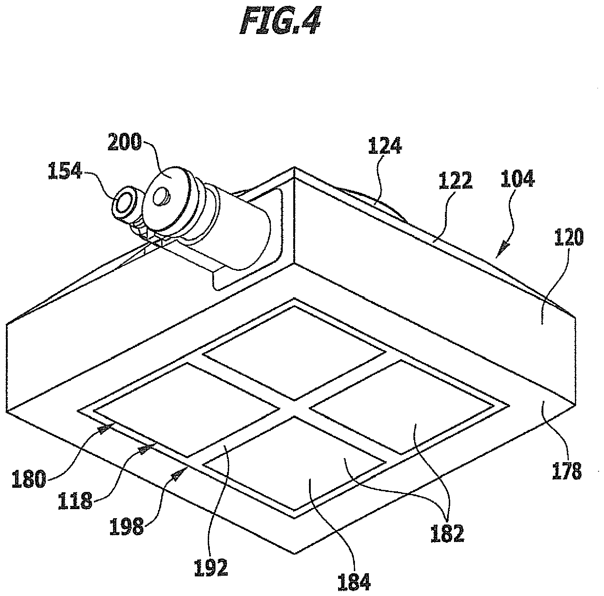

Die beiden Spannvorrichtungen 104 sind vorzugsweise im Wesentlichen gleich aufgebaut; beispielhaft ist eine der Spannvorrichtungen 104 in den Fig. 3 bis 7 im Einzelnen dargestellt.

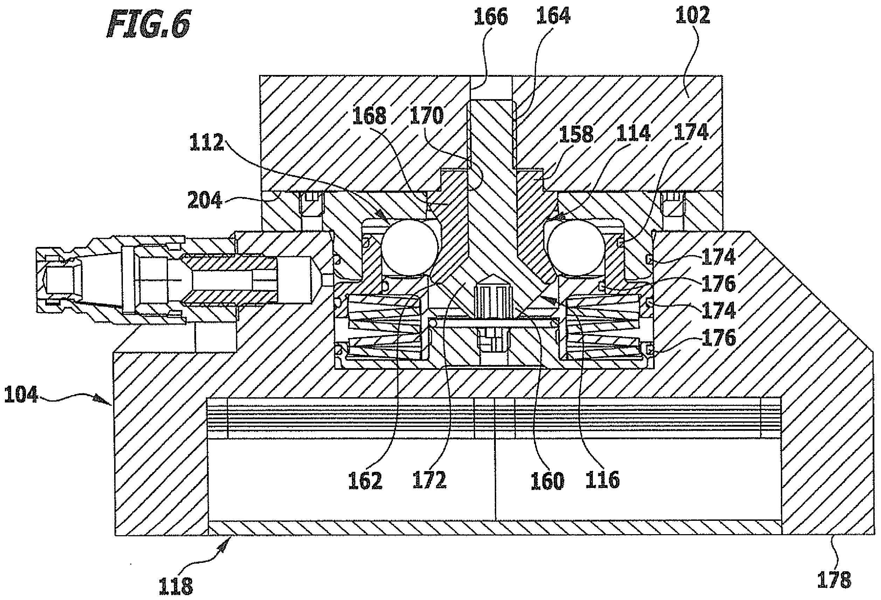

Die Spannvorrichtung 104 umfasst ein Gehäuse 110, in dem eine Arretiervorrichtung 112 zum Arretieren eines Einzugsnippels 114 (siehe Fig. 6) in einer Einzugsnippelaufnahme 116 der Spannvorrichtung 104 und eine Fixiervorrichtung 118, mittels welcher die Spannvorrichtung 104 an dem Untergrund 106 in einer Arbeitsposition lösbar fixierbar ist, angeordnet sind.

Wie am besten aus Fig. 3 zu ersehen ist, kann das Gehäuse 110 beispielsweise einen im Wesentlichen quaderförmigen unteren Teil 120 und einen im Wesentlichen pyramidenstumpfförmigen oberen Teil 122 umfassen.

An einer Oberseite 123 des Gehäuses 110 der Spannvorrichtung 104 ist ein Deckel 124 der Arretiervorrichtung 112 angeordnet.

Der Deckel 124 kann beispielsweise im Wesentlichen zylindrisch ausgebildet sein und weist längs seines Umfangs, vorzugsweise im Wesentlichen äquidistant, aufeinanderfolgende Durchtrittslöcher 126 für den Durchtritt von Befestigungsmitteln 128, beispielsweise Befestigungsschrauben, auf.

Die Befestigungsmittel 128 des Deckels 124 stehen in Eingriff mit (nicht dargestellten) Gewindebohrungen an der Oberseite 123 des Gehäuses 110, um den Deckel 124 an dem Gehäuse 110 festzulegen.

Der Deckel 124 weist eine mittige Eintrittsöffnung 130 für den Eintritt eines Einzugsnippels 114 in die unter dem Deckel 124 liegende Einzugsnippelaufnahme 116 der Spannvorrichtung 104 auf.

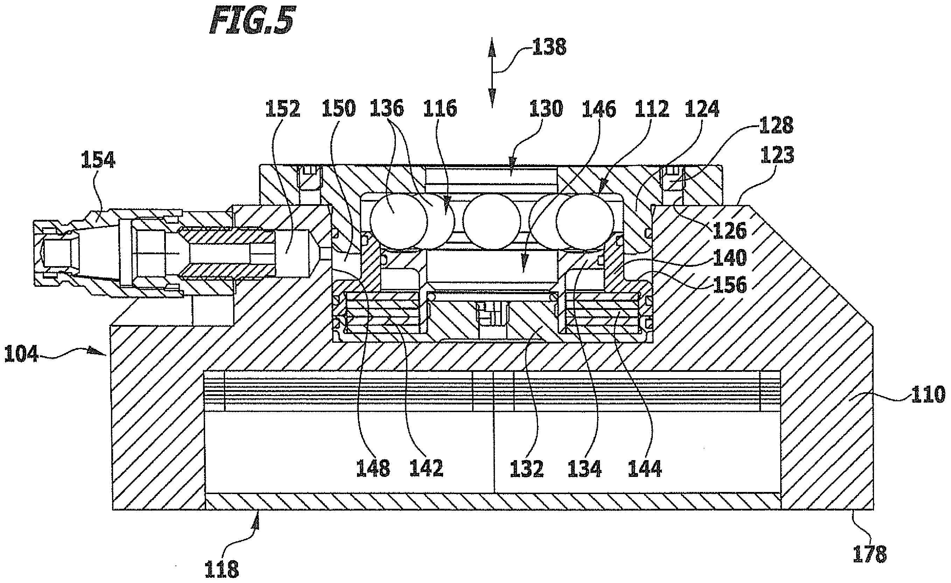

Wie am besten aus dem Querschnitt der Fig. 5 zu ersehen ist, umfasst die Arretiervorrichtung 112 ferner eine Federauflage 132, eine Arretierkörperauflage 134, mehrere in der Umfangsrichtung der Einzugsnippelaufnahme 116 aufeinanderfolgende und voneinander beabstandete Arretierkörper 136 (beispielsweise Arretierkugeln), einen in einer Verschieberichtung 138 verschieblichen Kolben 140, der zwischen einer in Fig. 5 dargestellten Freigabestellung und einer in Fig. 6 dargestellten Arretierstellung verschieblich ist, und ein elastisches Rückstellelement 142 (beispielsweise in Form einer Feder 144), welche den Kolben 140 in die in Fig. 6 dargestellte Arretierstellung vorspannt.

Die Federauflage 132, die Arretierkörperauflage 134, die Arretierkörper 136, der Kolben 140 und das elastische Rückstellelement 142 sind in einer, beispielsweise im Wesentlichen zylindrischen, Ausnehmung 146 an der Oberseite 123 des Gehäuses 110 der Spannvorrichtung 104 angeordnet.

Die Verschieberichtung 138 des Kolbens 140 ist vorzugsweise im Wesentlichen senkrecht zu der Oberseite 123 des Gehäuses 110 ausgerichtet.

Der verschiebliche Kolben 140 ist an seiner Außenseite an dem Deckel 124 und an einer Umfangswand 148 der Ausnehmung 146 und an seiner Innenseite an der Arretierkörperauflage 134 geführt.

Zwischen dem Deckel 124, der Umfangswand 148 der Ausnehmung 146 und dem Kolben 140 ist ein ringförmiger Druckraum 150 ausgebildet, der über einen Druckfluidkanal 152 in dem Gehäuse 110 und einen mit dem Druckfluidkanal 152 in Fluidverbindung stehenden Druckfluidanschluss 154 der Spannvorrichtung 104 an eine (nicht dargestellte) Druckfluidzufuhr der Spannanlage 100 anschließbar ist.

Über den Druckfluidanschluss 154 und den Druckfluidkanal 152 kann dem Druckraum 150 ein Druckfluid zugeführt werden, das unter einem gegenüber dem Umgebungsdruck erhöhten Druck steht.

Das Druckfluid im Druckraum 150 wirkt über eine quer, vorzugsweise im Wesentlichen senkrecht, zur Verschieberichtung 138 ausgerichtete Druckübertragungsfläche 156 auf den Kolben 140 ein, um denselben gegen die elastische Rückstellkraft des Rückstellelements 142 in die in Fig. 5 dargestellte Freigabestellung zu bewegen.

Das Druckfluid kann ein Pneumatikfluid, beispielsweise Luft, oder ein Hydraulikfluid, beispielsweise ein Hydrauliköl, sein.

Wenn der Druck in der Druckfluidzufuhr verringert wird, wird die vom Druckfluid auf die Druckübertragungsfläche 156 des Kolbens 140 ausgeübte Drucckraft geringer als die elastische Rückstellkraft des Rückstellelements 142, so dass der Kolben 140 längs der Verschieberichtung 138 von der in Fig. 5 dargestellten Freigabestellung in die in Fig. 6 dargestellte Arretierstellung überführt wird.

Dabei wird das Druckfluid zumindest teilweise aus dem Druckraum 150 verdrängt und fließt durch den Druckfluidkanal 152 und den Druckfluidanschluss 154 aus der Spannvorrichtung 104 ab.

Die von der Arretierkörperauflage 134 getragenen Arretierkörper 136 werden bei der Bewegung des Kolbens 140 von der Freigabestellung in die Arretierstellung von dem Kolben 140 radial nach innen verdrängt.

Wenn ein Einzugsnippel 114 in der Einzugsnippelaufnahme 116 der Spannvorrichtung 104 angeordnet ist, wie es in Fig. 6 dargestellt ist, so werden die Arretierkörper 136 von dem Kolben 140 in der Arretierstellung gegen den Einzugsnippel 114 gepresst.

Der Einzugsnippel 114 umfasst eine Basis 158, mit welcher der Einzugsnippel 114 an der Werkstückpalette 102 anliegt, eine der Werkstückpalette 102 abgewandte Spitze 160 und eine zwischen der Basis 158 und der Spitze 160 liegende Verdickung 162, welche in der Arretierstellung des Kolbens 140 von den Arretierkörpern 136 hintergriffen wird, so dass der Einzugsnippel 114 in diesem Arretierzustand der Arretiervorrichtung 112 durch Formschluss in der Einzugsnippelaufnahme 116 der Spannvorrichtung 104 arretiert ist.

Der Einzugsnippel 114 ist durch Stoffschluss und/oder durch Formschluss an der Werkstückpalette 102 festgelegt.

Beispielsweise kann vorgesehen sein, dass der Einzugsnippel 114 ein Gewinde 164 aufweist, welches mit einem komplementären Gewinde einer Gewindebohrung 166 der Werkstückpalette 102 verschraubt ist.

Der Einzugsnippel 114 kann einteilig oder, wie in Fig. 6 dargestellt, mehrteilig ausgebildet sein.

Beispielsweise kann vorgesehen sein, dass die Basis 158 und die Umfangswand des Einzugsnippels 114 bis zu der Verdickung 162 einen ringförmigen Mantel 168 des Einzugsnippels 114 bilden, durch dessen mittige Ringöffnung 170 sich ein Schraubteil 172 des Einzugsnippels 114 hindurch erstreckt, wobei an dem Schraubteil 172 die Spitze 160 und das Gewinde 164 des Einzugsnippels angeordnet sind, so dass das Schraubteil 172 mit der Werkstückpalette 102 verschraubt ist und den Mantel 168 des Einzugsnippels 114 so hintergreift, dass der Mantel 168 durch Formschluss an der Werkstückpalette 102 gehalten ist.

Jede Werkstückpalette 102, die mit der Spannanlage 100 eingespannt werden soll, ist mit mehreren solchen Einzugsnippeln 114, insbesondere mit zwei oder mehr solcher Einzugsnippel 114, versehen.

Der Druckraum 150 der Arretiervorrichtung 112 ist mittels Dichtungen 174 am Kolben 140 und am Deckel 124 gegenüber seiner Umgebung abgedichtet.

Weitere Dichtungen 176 können an der Arretierkörperauflage 134 und/oder an der Federauflage 132 angeordnet sein.

Die Fixiervorrichtung der Spannvorrichtung 104 ist an der der Oberseite 123 des Gehäuses 110 der Spannvorrichtung 104 abgewandten Unterseite 178 des Gehäuses 110 angeordnet.

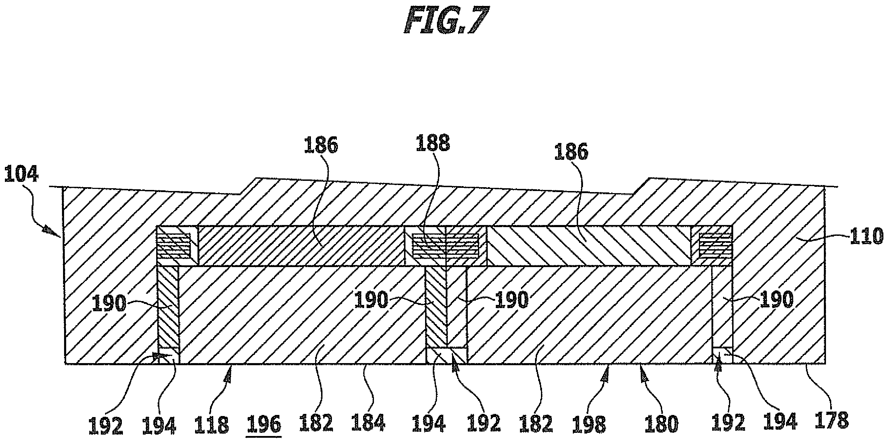

Der Aufbau der Fixiervorrichtung 118 ist am besten aus dem Querschnitt der Fig. 7 zu ersehen.

Die Fixiervorrichtung 118 ist in diesem Ausführungsbeispiel als eine Magnetspanneinrichtung 180 ausgebildet und umfasst mehrere, beispielsweise vier, Polstücke 182, die vorzugsweise im Wesentlichen quaderförmig ausgebildet sind und vorzugsweise aus einem ferromagnetischen Material gebildet sind.

Die freien Oberflächen der Polstücke 182 bilden Bestandteile einer Fixierfläche 184 an der Unterseite 178 des Gehäuses 110.

An der der Fixierfläche 184 abgewandten Seite jedes Polstücks 182 ist jeweils ein reversibler oder umpolbarer Permanentmagnet 186 angeordnet, welcher von einer Magnetspule 188 umgeben ist.

An den senkrecht zur Fixierfläche 184 verlaufenden Umfangsseiten jedes Polstücks 182 sind mehrere, beispielsweise jeweils vier, nicht reversible oder statische Permanentmagnete 190 angeordnet.

Die statischen Permanentmagnete 190 erstrecken sich nicht ganz bis zur Fixierfläche 184, so dass zwischen jeweils zwei benachbarten Polstücken 182 oder zwischen einem Polstück 182 und einem benachbarten Bereich der Unterseite 178 des Gehäuses 110 der Spannvorrichtung 104 eine Fuge 192 entsteht.

Um eine möglichst ebene Fixierfläche 184 an der Unterseite der Spannvorrichtung 104 zu erhalten und ein Eindringen von Flüssigkeit oder partikelförmigen Fremdkörpern, beispielsweise Bearbeitungsspänen, in die Zwischenräume zwischen den Polstücken 182, den statischen Permanentmagneten 190 und dem Gehäuse 110 zu verhindern, sind die Fugen 192 vorzugsweise mit einem Füllmaterial gefüllt, beispielsweise mit einem Harz.

In einem Fixierzustand der Fixiervorrichtung 118 sind die umpolbaren Permanentmagnete 186 so gepolt, dass die umpolbaren Permanentmagnete 186 zusammen mit den statischen Permanentmagneten 190 einen Magnetfluss erzeugen, welcher durch die Polstücke 182 hindurch in den Außenraum 196 im Bereich der Fixierfläche 184 austritt, so dass zwischen einem in diesem Außenraum 196 angeordneten ferromagnetischen Material und den Polstücken 182 eine starke magnetische Anziehungskraft erzeugt wird, durch welche die Spannvorrichtung 104 an einem ferromagnetischen Untergrund 106 fixierbar ist.

Durch Anlegen einer elektrischen Spannung an die Magnetspulen 188 kann kurzzeitig ein elektromagnetisches Feld erzeugt werden, dass dazu in der Lage ist, die umpolbaren Permanentmagnete 186 umzupolen, so dass die Magnetspanneinrichtung 180 von ihrem Fixierzustand in einen Lösezustand überführt wird.

In diesem Lösezustand sind die umpolbaren Permanentmagnete 186 und die statischen Permanentmagnete 190 so gepolt, dass sie gemeinsam ein Magnetfeld erzeugen, das ausschließlich im Inneren der Magnetspanneinrichtung 180 verläuft und nicht über die Polstücke 182 hinaus in den Außenraum 196 vor der Fixierfläche 184 dringt.

In diesem Lösezustand existiert daher keine magnetische Anziehungskraft zwischen der Spannvorrichtung 104 und einem ferromagnetischen Untergrund 106.

Die freie Oberfläche der in diesem Ausführungsbeispiel als Magnetspanneinrichtung 180 ausgebildeten Fixiervorrichtung 118 bildet somit einen Fixierbereich 198, an welchem in einem Fixierzustand der Fixiervorrichtung 118 ein magnetischer Fluss erzeugbar ist, um die Spannvorrichtung 104 an einem ferromagnetischen Untergrund 106 zu fixieren.

Im Lösezustand der Fixiervorrichtung 118 existiert hingegen kein magnetischer Fluss oder allenfalls ein geringer magnetischer Fluss in dem Fixierbereich 198, so dass die Spannvorrichtung 104 in diesem Lösezustand der Fixiervorrichtung 118 nicht an dem Untergrund 106 fixiert ist, sondern relativ zu dem Untergrund 106 frei beweglich ist.

Die Magnetspulen 188 der Fixiervorrichtung 118 sind über (nicht dargestellte) elektrische Leitungen in dem Gehäuse 110 der Spannvorrichtung 104 mit einem (in Fig. 3 dargestellten) Elektroanschluss 200 der Spannvorrichtung 104 verbunden, an welchen eine (nicht dargestellte) Spannungs- oder Stromquelle anschließbar ist.

Mit zwei Spannvorrichtungen 104 der vorstehend beschriebenen Art wird ein Verfahren zum Einspannen der Werkstückpalette 102 mit zwei Einzugsnippeln 114 wie folgt durchgeführt:
Eine erste Spannvorrichtung 104a und eine zweite Spannvorrichtung 104b werden in einer jeweiligen Arbeitsposition auf eine Oberseite 202 eines Untergrundes 106, beispielsweise einer Grundplatte 108 oder eines Maschinentisches, aufgesetzt.

Dabei sind die Arbeitspositionen der Spannvorrichtungen 104a und 104b relativ zueinander so gewählt, dass der Abstand zwischen den Mittelachsen der Einzugsnippelaufnahmen 116 im Wesentlichen dem Abstand zwischen den Mittelachsen der Einzugsnippel 114 an der Werkstückpalette 102 entspricht.

Die Spannvorrichtung 104a und 104b werden über ihren jeweiligen Druckfluidanschluss 154 an die (nicht dargestellte) Druckfluidzufuhr und über ihren jeweiligen Elektroanschluss 200 an die (nicht dargestellte) Spannungsquelle oder Stromquelle angeschlossen.

Die Fixiervorrichtungen 118 der Spannvorrichtungen 104a, 104b befinden sich zunächst in ihrem Lösezustand, so dass die über ihre Fixierflächen 184 an der Oberseite 202 des Untergrundes 106, vorzugsweise im Wesentlichen flächig, anliegenden Spannvorrichtungen 104a und 104b leicht relativ zueinander und relativ zu dem Untergrund 106 verschoben werden können, um einen gewünschten Abstand D (siehe Fig. 1) zwischen den Spannvorrichtungen 104a und 104b einzustellen.

Wenn sich beide Spannvorrichtungen 104a und 104b in der gewünschten Arbeitsposition befinden, werden die umpolbaren Permanentmagnete 186 der Magnetspanneinrichtung 180 der Spannvorrichtung 104a und 104b durch einen über die Elektroanschlüsse 200 an die Magnetspulen 188 angelegten Spannungspuls umgepolt, um die Fixiervorrichtung 118 in den Fixierzustand zu überführen, in welchem die Spannvorrichtungen 104a und 104b in ihrer jeweiligen Arbeitsposition lösbar an dem Untergrund 106 fixiert sind.

Durch Zuführen eines unter Druck stehenden Druckfluides in die Druckräume 150 der Arretiervorrichtungen 112 der Spannvorrichtung 104a und 104b werden die Arretiervorrichtungen 112 in den Freigabezustand versetzt, in welchem die Einzugsnippel 114 der Werkstückpalette 102 in die Einzugsnippelaufnahmen 116 der Spannvorrichtungen 104a und 104b einführbar sind.

Nun wird die Werkstückpalette 102 so auf die Spannvorrichtungen 104a und 104b aufgesetzt, dass deren Einzugsnippel 114 in die Einzugsnippelaufnahmen 116 gelangen.

Dabei liegt eine Unterseite 204 der Werkstückpalette 102, vorzugsweise im Wesentlichen flächig, an der Oberseite 123 des jeweiligen Deckels 124 der Spannvorrichtungen 104a und 104b an.

Anschließend werden die Arretiervorrichtungen 112 der Spannvorrichtungen 104a und 104b in den Arretierzustand versetzt, in welchem die Arretierkörper 136 die Verdickungen 162 der Einzugsnippel 114 hintergreifen, so dass die Einzugsnippel 114 in den Einzugsnippelaufnahmen 116 arretiert sind.

Um die Werkstückpalette 102 wieder von den Spannvorrichtungen 104 lösen zu können, wird den Druckräumen 150 der Arretiervorrichtungen 112 der Spannvorrichtungen 104a und 104b wieder unter Druck stehendes Druckfluid zugeführt, so dass die Arretiervorrichtungen 112 vom Arretierzustand in den Freigabezustand überführt werden und die Einzugsnippel 114 aus der jeweiligen Einzugsnippelaufnahme 116 herausbewegt werden können.

Wenn die Werkstückpalette 102 von den Spannvorrichtungen 104a und 104b gelöst worden ist und eine andere Werkstückpalette 102' mittels der Spannanlage 100 eingespannt werden soll, welche andere Abmessungen (beispielsweise eine andere Länge) aufweist, so dass die Werkstückpalette 102 und deren Einzugsnippel 114 einen anderen Abstand voneinander aufweisen als bei der Werkstückpalette 102, werden die Arbeitspositionen der Spannvorrichtungen 104a und 104b so verändert, dass der Abstand zwischen den Mittelachsen der Einzugsmittelaufnahmen 116 dem neuen Abstand zwischen den Mittelachsen der Einzugsnippel 114 entspricht.

Hierzu werden die Spannvorrichtungen 104a und 104b von dem Untergrund 106 gelöst, indem die Fixiervorrichtungen 118 durch Umpolen der umpolbaren Permanentmagnete 186 der Magnetspanneinrichtungen 180 vom Fixierzustand in den Lösezustand überführt werden.

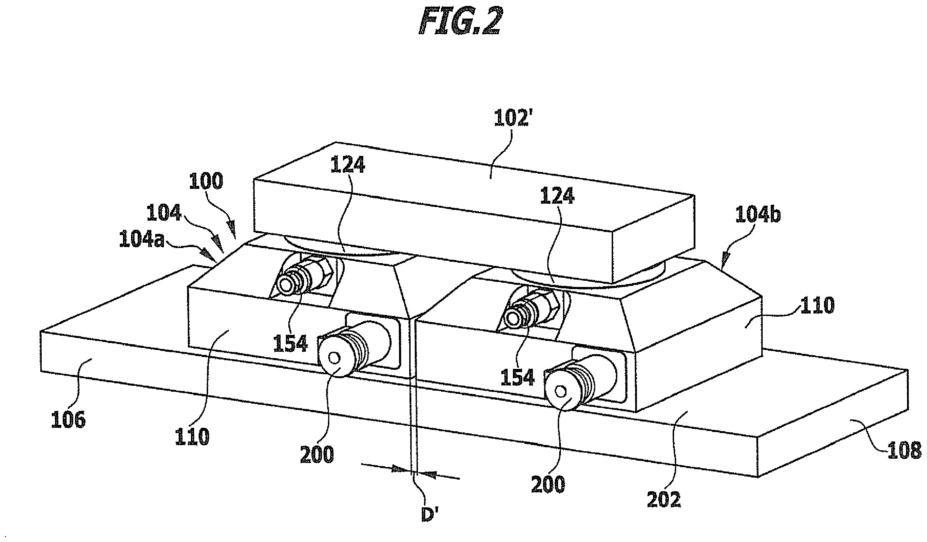

Anschließend werden die Spannvorrichtungen 104a und 104b relativ zueinander und relativ zu dem Untergrund 106 verschoben, bis die (in Fig. 2 dargestellten) neuen Arbeitspositionen erreicht sind.

In ihren neuen Arbeitspositionen können die Spannvorrichtungen 104a und 104b einen Abstand D' voneinander aufweisen, welcher von dem vorherigen Abstand D verschieden ist; insbesondere ist der Abstand D' bei der in Fig. 2 dargestellten Anordnung der Spannvorrichtungen 104a und 104b kleiner als bei der in Fig. 1 dargestellten Anordnung.

In den neuen Arbeitspositionen werden die Spannvorrichtungen 104 mittels der Fixiervorrichtungen 118 lösbar an dem Untergrund 106 fixiert, wie dies bereits vorstehend beschrieben worden ist. Auch das Einspannen der Werkstückpalette 102' an den Spannvorrichtungen 104a und 104b sowie das Lösen der Werkstückpalette 102' von den Spannvorrichtungen 104a und 104b erfolgt in derselben Weise, wie dies vorstehend beschrieben worden ist.

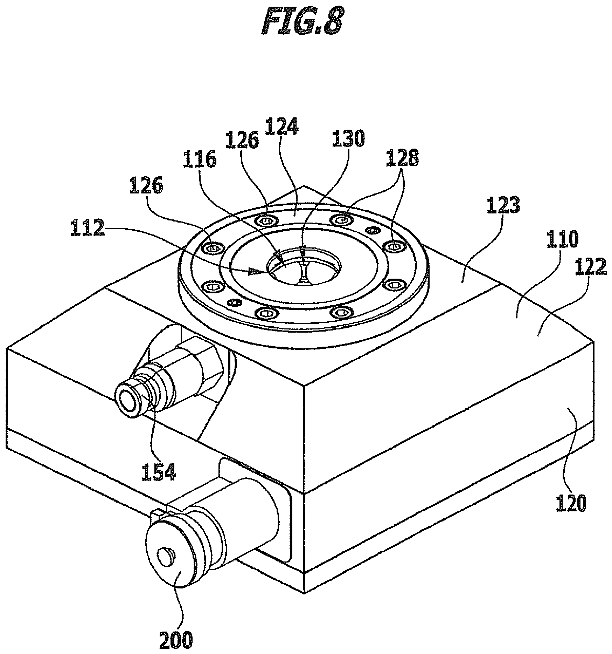

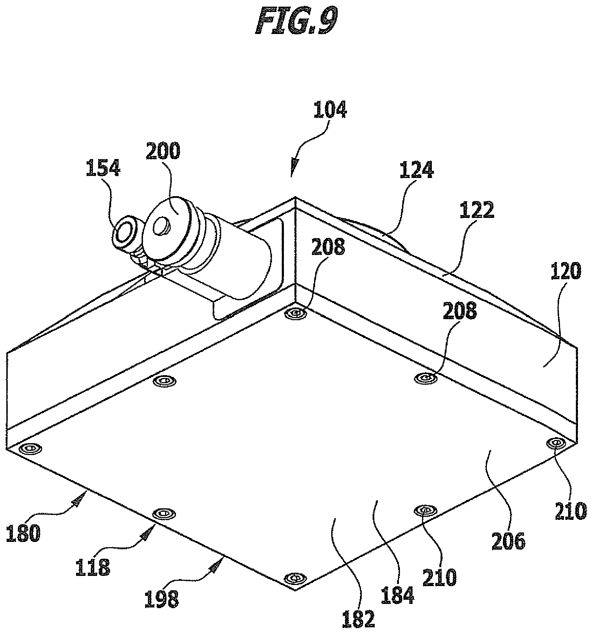

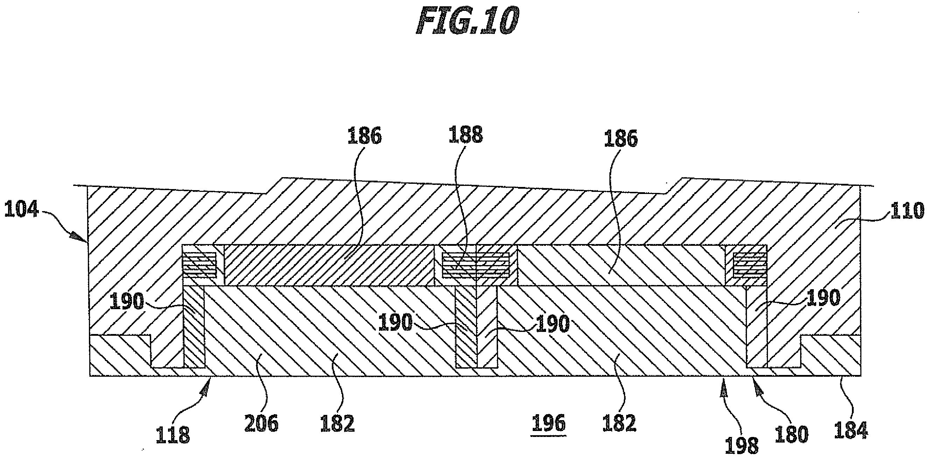

Eine in den Fig. 8 bis 10 dargestellte Ausführungsform einer Spannvorrichtung 104, die in einer Spannanlage 100 der vorstehend beschriebenen Art verwendbar ist, unterscheidet sich von der vorstehend beschriebenen, in den Fig. 3 bis 7 dargestellten ersten Ausführungsform dadurch, dass der Fixierbereich 198 der Fixiervorrichtung 118 keine mit einem Füllmaterial 194 gefüllten Fugen 192 aufweist, sondern die Polstücke 182 einstückig miteinander verbunden sind und so einen zusammenhängenden Polkörper 208 bilden, welcher eine im Wesentlichen ebene, monolithische Fixierfläche 184 aufweist, die sich vorzugsweise über im Wesentlichen die gesamte Unterseite 178 des Gehäuses 110 der Spannvorrichtung 104 erstreckt.

Der Polkörper 206 ist vorzugsweise durch Befestigungsmittel 208, die sich durch Durchtrittslöcher 210 in dem Polkörper 206 hindurch in (nicht dargestellte) Gewindesacklöcher in dem Gehäuse 110 erstrecken, an dem Gehäuse 110 festgelegt.

Die Durchtrittslöcher 210 sind vorzugsweise in einem Randbereich des Polkörpers 206 angeordnet.

Im Übrigen stimmt die in den Fig. 8 bis 10 dargestellte zweite Ausführungsform einer Spannvorrichtung 104 hinsichtlich Aufbau und Funktionsweise mit der in den Fig. 3 bis 7 dargestellten ersten Ausführungsform überein, auf deren vorstehende Beschreibung insoweit Bezug genommen wird.

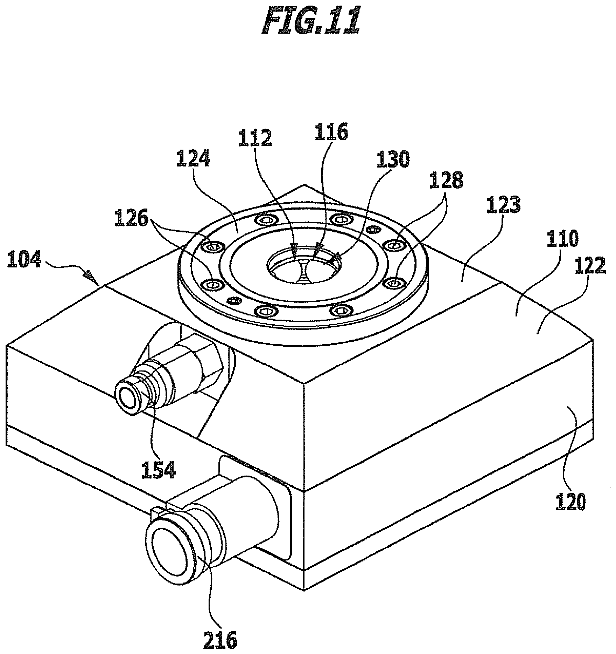

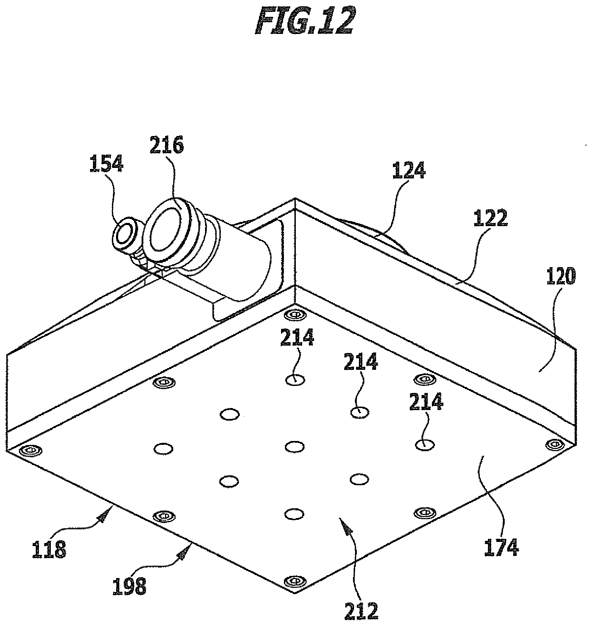

Eine in den Fig. 11 und 12 dargestellte dritte Ausführungsform einer Spannvorrichtung 104, die in einer Spannanlage 100 der vorstehend beschriebenen Art verwendbar ist, unterscheidet sich von den beiden vorstehend beschriebenen Ausführungsformen von Spannvorrichtungen 104 dadurch, dass die Fixiervorrichtung 118 nicht als eine Magnetspanneinrichtung 180, sondern als eine Vakuumspanneinrichtung 212 ausgebildet ist.

Bei dieser Ausführungsform erfolgt die lösbare Fixierung der Spannvorrichtung 104 an einem Untergrund 106 dadurch, dass durch Absaugöffnungen 214 an der Unterseite 178 der Spannvorrichtung 104 Luft abgesaugt wird, so dass im Fixierbereich 198 ein Unterdruck erzeugt wird und der Untergrund 106 im Fixierzustand vom höheren Umgebungsdruck gegen die Spannvorrichtung 104 gepresst wird.

Durch Abschalten des Unterdrucks wird die Fixiervorrichtung 118 von dem Fixierzustand in den Lösezustand überführt, in welchem die Spannvorrichtung 104 frei relativ zu dem Untergrund 106 beweglich ist.

Der Unterdruck an den Absaugöffnungen 214 kann beispielsweise dadurch erzeugt werden, dass die Vakuumspanneinrichtung 212 über einen Vakuumanschluss 216 mit einer externen Unterdruckquelle, beispielsweise einer Vakuumpumpe, verbunden wird.

Alternativ oder ergänzend hierzu kann ein Unterdruck in der Vakuumspanneinrichtung 212 auch dadurch erzeugt werden, dass in die Vakuumspanneinrichtung 212 eine oder mehrere Venturidüsen integriert sind, welche einen Unterdruck erzeugen, wenn diesen Venturidüsen über einen Druckfluidanschluss, insbesondere einen Druckluftanschluss, ein unter Druck stehendes Fluid, beispielsweise Druckluft, zugeführt wird.

Im Übrigen stimmt die in den Fig. 11 und 12 dargestellte dritte Ausführungsform einer Spannvorrichtung 104 hinsichtlich Aufbau und Funktionsweise mit den in den Fig. 3 bis 10 dargestellten Ausführungsformen überein, auf deren vorstehende Beschreibung insoweit Bezug genommen wird.

## Patentansprüche

1. Verfahren zum Einspannen einer Werkstückpalette (102) oder eines Werkstücks mit mindestens zwei Einzugsnippeln (114) an mindestens zwei Spannvorrichtungen (104), die jeweils eine Arretiervorrichtung (112) zum Arretieren eines Einzugsnippels (114) in einer Einzugsnippelaufnahme (116) der jeweiligen Spannvorrichtung (104) und jeweils eine Fixiervorrichtung (118), mittels welcher die jeweilige Spannvorrichtung (104) an einem Untergrund (106) in einer Arbeitsposition lösbar fixierbar ist, umfassen,
wobei das Verfahren Folgendes umfasst:
- Anordnen der Spannvorrichtungen (104) in einem vorgegebenen Abstand (D, D') voneinander an einem Untergrund (106);
- Fixieren der Spannvorrichtungen (104) an dem Untergrund (106) mittels jeweils einer Fixiervorrichtung (118), die eine Vakuumspanneinrichtung (212) umfasst;
- Einspannen der Werkstückpalette (102) oder des Werkstücks durch Einführen der Einzugsnippel (114) in jeweils eine Einzugsnippelaufnahme (116) einer der Spannvorrichtungen (104) und Arretieren der Einzugsnippel (114) mittels der jeweiligen Arretiervorrichtung (112).

2. Verwendung einer Spannvorrichtung (104) zum Einspannen eines Einzugsnippels (114) einer Werkstückpalette (102) oder eines Werkstücks, wobei die Spannvorrichtung (104) eine Arretiervorrichtung (112) zum Arretieren des Einzugsnippels (114) in einer Einzugsnippelaufnahme (116) der Spannvorrichtung (104) und
eine Fixiervorrichtung (118), mittels welcher die Spannvorrichtung (104) an einem Untergrund (106) in einer Arbeitsposition lösbar fixierbar ist, umfasst und
wobei die Fixiervorrichtung (118) eine Vakuumspanneinrichtung (212) umfasst,
bei der Durchführung des Verfahrens nach Anspruch 1.

3. Verwendung nach Anspruch 2, **dadurch gekennzeichnet, dass** die Spannvorrichtung (104) ein Gehäuse (110) umfasst, in dem die Arretiervorrichtung (112) und die Fixiervorrichtung (118) angeordnet sind.

4. Verwendung nach einem der Ansprüche 2 oder 3, **dadurch gekennzeichnet, dass** die Arretiervorrichtung (112) einen verschieblichen Kolben (140) umfasst, der mit einem unter Druck stehenden Fluid beaufschlagbar ist.

5. Verwendung nach Anspruch 4, **dadurch gekennzeichnet, dass** die Arretiervorrichtung (112) mehrere Arretierkörper (136) umfasst, die durch Verschieben des Kolbens (140) in eine Arretierstellung bringbar sind, in welcher die Arretierkörper (136) den Einzugsnippel (114) in der Einzugsnippelaufnahme (116) arretieren.

6. Verwendung nach einem der Ansprüche 4 oder 5, **dadurch gekennzeichnet, dass** die Arretiervorrichtung (112) ein elastisches Rückstellelement (142) zum Vorspannen des Kolbens (140) in die Arretierstellung umfasst.

7. Verwendung nach einem der Ansprüche 2 bis 6, **dadurch gekennzeichnet, dass** die Fixiervorrichtung (118) einen Fixierbereich (198) umfasst, an welchem in einem Fixierzustand der Fixiervorrichtung (118) ein Unterdruck erzeugbar ist.

8. Verwendung nach Anspruch 7, **dadurch gekennzeichnet, dass** die Spannvorrichtung (104) mit dem Fixierbereich (198) auf den Untergrund (106) aufsetzbar ist.

9. Verwendung nach einem der Ansprüche 7 oder 8, **dadurch gekennzeichnet, dass** der Fixierbereich (198) und die Einzugsnippelaufnahme (116) auf einander entgegengesetzten Seiten der Spannvorrichtung (104) angeordnet sind.

10. Verwendung nach einem der Ansprüche 2 bis 9, **dadurch gekennzeichnet, dass** die Spannvorrichtung (104) einen Druckfluidanschluss (154) und einen Elektroanschluss (200), einen Vakuumanschluss oder einen Druckluftanschluss aufweist.

11. Verwendung nach einem der Ansprüche 2 bis 10, **dadurch gekennzeichnet, dass** eine zweite Spannvorrichtung (104b) verwendet wird und dass die zwei Spannvorrichtungen (104a, 104b) mittels ihrer Fixiervorrichtungen (118) in unterschiedlichen Abständen (D, D') voneinander an dem Untergrund (106) fixierbar und mittels ihrer Arretiervorrichtungen (112) mit verschiedenen Einzugsnippeln (114) einer Werkstückpalette (102) oder eines Werkstücks koppelbar sind.

## Claims

1. Method for clamping a workpiece pallet (102) or a workpiece with at least two draw-in nipples (114) on at least two clamping devices (104) which each comprise a locking device (112) for locking a draw-in nipple (114) in a draw-in nipple receptacle (116) of the respective clamping device (104) and
each a fixing device (118) by means of which the respective clamping device (104) is releasably fixable in a working position on a support (106),
wherein the method comprises the following:
- arranging the clamping devices (104) at a predetermined distance (D, D') from each other on a support (106);
- fixing the clamping devices (104) on the support (106) by means of in each case one fixing device (118) which comprises a vacuum clamping apparatus (212);
- clamping the workpiece pallet (102) or the workpiece by inserting the draw-in nipples (114) each into a draw-in nipple receptacle (116) of one of the clamping devices (104) and locking the draw-in nipples (114) by means of the respective locking device (112).

2. Use of a clamping device (104) for clamping a draw-in nipple (114) of a workpiece pallet (102) or a workpiece,
wherein the clamping device (104) comprises a locking device (112) for locking the draw-in nipple (114) in a draw-in nipple receptacle (116) of the clamping device (104) and
a fixing device (118) by means of which the clamping device (104) is releasably fixable in a working position on a support (106), and
wherein the fixing device (118) comprises a vacuum clamping apparatus (212)
in carrying out the method in accordance with Claim 1.

3. Use in accordance with Claim 2, **characterized in that** the clamping device (104) comprises a housing (110) in which the locking device (112) and the fixing device (118) are arranged.

4. Use in accordance with either of Claims 2 or 3, **characterized in that** the locking device (112) comprises a displaceable piston (140) which is able to be acted upon with a pressurized fluid.

5. Use in accordance with Claim 4, **characterized in that** the locking device (112) comprises a plurality of locking bodies (136) which are able to be brought into a locking position by displacing the piston (140), in which locking position the locking bodies (136) lock the draw-in nipple (114) in the draw-in nipple receptacle (116).

6. Use in accordance with either of Claims 4 or 5, **characterized in that** the locking device (112) comprises an elastic restoring element (142) for biasing the piston (140) into the locking position.

7. Use in accordance with any one of Claims 2 to 6, **characterized in that** the fixing device (118) comprises a fixing region (198) at which, in a fixing state of the fixing device (118), an underpressure is producible.

8. Use in accordance with Claim 7, **characterized in that** the clamping device (104) is placeable with the fixing region (198) onto the support (106).

9. Use in accordance with either of Claims 7 or 8, **characterized in that** the fixing region (198) and the draw-in nipple receptacle (116) are arranged on opposite sides of the clamping device (104).

10. Use in in accordance with any one of Claims 2 to 9, **characterized in that** the clamping device (104) has a pressurized fluid connection (154) and an electrical connection (200), a vacuum connection or a pressurized air connection.

11. Use in accordance with any one of Claims 2 to 10, **characterized in that** a second clamping device (104b) is used, and **in that** the two clamping devices (104a, 104b) are fixable by means of the fixing devices (118) thereof on the support (106) at different distances (D, D') from each other and are coupleable by means of the locking devices (112) thereof to different draw-in nipples (114) of a workpiece pallet (102) or a workpiece.

## Revendications

1. Procédé servant à enserrer une palette de pièces (102) ou une pièce avec au moins deux raccords d'insertion (114) au niveau d'au moins deux dispositifs de serrage (104), qui comprennent respectivement un dispositif d'arrêt (112) servant à arrêter un raccord d'insertion (114) dans un logement de raccord d'insertion (116) du dispositif de serrage (104) respectif et respectivement un dispositif de blocage (118), au moyen duquel le dispositif de serrage (104) respectif peut être bloqué de manière amovible dans une position de travail au niveau d'un support (106), dans lequel le procédé comprend ce qui suit :
- l'agencement des dispositifs de serrage (104) selon un espacement (D, D') prédéfini les uns des autres au niveau d'un support (106) ;
- le blocage des dispositifs de serrage (104) au niveau du support (106) au moyen de respectivement un dispositif de blocage (118), qui comprend un système de serrage sous vide (212) ;
- l'enserrage de la palette de pièces (102) ou de la pièce en introduisant les raccords d'insertion (114) dans respectivement un logement de raccord d'insertion (116) d'un des dispositifs de serrage (104) et l'arrêt des raccords d'insertion (114) au moyen du dispositif d'arrêt (112) respectif.

2. Utilisation d'un dispositif de serrage (104) servant à enserrer un raccord d'insertion (114) d'une palette de pièces (102) ou d'une pièce,
dans laquelle le dispositif de serrage (104) comprend un dispositif d'arrêt (112) servant à arrêter le raccord d'insertion (114) dans un logement de raccord d'insertion (116) du dispositif de serrage (104), et
un dispositif de blocage (118), au moyen duquel le dispositif de serrage (104) peut être bloqué de manière amovible dans une position de travail au niveau d'un support (106), et
dans lequel le dispositif de blocage (118) comprend un système de serrage sous vide (212),
lors de la mise en oeuvre du procédé selon la revendication 1.

3. Utilisation selon la revendication 2, **caractérisée en ce que** le dispositif de serrage (104) comprend un boîtier (110), dans lequel sont disposés le dispositif d'arrêt (112) et le dispositif de blocage (118).

4. Utilisation selon l'une quelconque des revendications 2 ou 3, **caractérisée en ce que** le dispositif d'arrêt (112) comprend un piston (140) pouvant être coulissé, qui peut être soumis à l'action d'un fluide sous pression.

5. Utilisation selon la revendication 4, **caractérisée en ce que** le dispositif d'arrêt (112) comprend plusieurs corps d'arrêt (136), qui peuvent être amenés par coulissement du piston (140) dans une position d'arrêt, dans laquelle les corps d'arrêt (136) arrêtent le raccord d'insertion (114) dans le logement de raccord d'insertion (116).

6. Utilisation selon l'une quelconque des revendications 4 ou 5, **caractérisée en ce que** le dispositif d'arrêt (112) comprend un élément de rappel (142) élastique servant à précontraindre le piston (140) dans la position d'arrêt.

7. Utilisation selon l'une quelconque des revendications 2 à 6, **caractérisée en ce que** le dispositif de blocage (118) comprend une zone de blocage (198), au niveau de laquelle une dépression peut être générée dans un état de blocage du dispositif de blocage (118).

8. Utilisation selon la revendication 7, **caractérisée en ce que** le dispositif de serrage (104) peut être placé avec la zone de blocage (198) sur le support (106).

9. Utilisation selon l'une quelconque des revendications 7 ou 8, **caractérisée en ce que** la zone de blocage (198) et le logement de raccord d'insertion (116) sont disposés sur des côtés opposés les uns aux autres du dispositif de serrage (104).

10. Utilisation selon l'une quelconque des revendications 2 à 9, **caractérisée en ce que** le dispositif de serrage (104) présente un raccordement de fluide de pression (154) et un raccordement électrique (200), un raccordement de vide ou un raccordement d'air comprimé.

11. Utilisation selon l'une quelconque des revendications 2 à 10, **caractérisée en ce qu'**un deuxième dispositif de serrage (104b) est utilisé, et que les deux dispositifs de serrage (104a, 104b) peuvent être bloqués au moyen de leurs dispositifs de blocage (118) selon des espacements (D, D') différents les uns des autres au niveau du support (106) et peuvent être couplés à des raccords d'insertion (114) différents d'une palette de pièces (102) ou d'une pièce au moyen de leurs dispositifs d'arrêt (112).
